# EUROPEAN PATENT APPLICATION

(11) **EP 4 302 662 A2**
(43) Date of publication of application: **10.01.2024**
(21) Application number: 23183781.6
(22) Date of filing: 06.07.2023
(51) Int. Cl.: A47J 42/04, A47J 42/46

(54) **MANUAL GRINDER**

(30) Priority: 06.07.2022 CN 202221724970 U
(71) Applicant: Ningbo Chefshere Kitchen Technology Co., Ltd, Ningbo, Zhejiang 315000 (CN)
(72) Inventor: ZHANG, Chao, Ningbo, 315000 (CN)
(74) Representative: karo IP

(57) **Abstract**

The present invention relates to a manual grinder, comprising a shell, a handle and a grinding assembly, wherein the top of the shell is provided with an opening and a swivelling cover, the swivelling cover is provided with a feed port, the feed port is provided with a closing cover, the closing cover is fixed relative to the shell, the swivelling cover is rotatably connected with the shell, the grind assembly is arranged in the shell, a transmission shaft is arranged in the shell, the upper end of the transmission shaft penetrates the swivelling cover and is connected with the handle, and the lower end of the transmission shaft is penetrated in the grinding assembly. The manual grinder obtained by the present invention has the following advantages: it is simple to open the cover and convenient to put materials, the opening of the cover is not affected by the handle, and the overall structure is simple.

## Description

### Technical Field

The present invention relates to the technical field of food particle grinding, in particular to a manual grinder.

### Background

With the development of the times and the improvement of the quality of life, grinders are commonly used in modern families for grinding coffee beans, Sichuan pepper, salt and pepper.

In the prior art, for example, a Chinese patent for utility model CN207444845U discloses a bean pot of a manual grinder, comprising a bean storage pot, a powder pot and a handle, wherein the upper end of the bean storage pot is fixedly provided with an upper cover that can be opened and closed, a grinder is arranged in the lower port of the bean storage pot, and the powder pot is in matching connection with the lower port of the bean storage pot; and a transmission shaft is arranged in the bean storage pot, the upper end of the transmission shaft penetrates the upper cover and is fixedly connected with the handle, and the lower end of the transmission shaft is penetrated in the grinder and provided with a take-up device in transmission connection with the grinder. However, the bean pot of a manual grinder has the disadvantages that it is troublesome to open the cover and inconvenient to put beans, and the handle is easy to interfere with the opening of the cover.

### Summary

One purpose of the present invention is to provide a manual grinder, which has the advantages that the handle does not interfere with the opening of the cover and it is convenient to put materials.

The other purpose of the present invention is to provide a manual grinder, which is simple in structure and convenient in use and can be used for grinding coffee beans, Sichuan pepper, salt and pepper.

To achieve the above purposes, the present invention adopts the following technical solution:
A manual grinder, comprising a shell, a handle and a grinding assembly, wherein the top of the shell is provided with an opening and a swivelling cover, the swivelling cover is provided with a feed port, the feed port is provided with a closing cover, the closing cover is fixed relative to the shell, the swivelling cover is rotatably connected with the shell, the grind assembly is arranged in the shell, a transmission shaft is arranged in the shell, the upper end of the transmission shaft penetrates the swivelling cover and is connected with the handle, and the lower end of the transmission shaft is penetrated in the grinding assembly; the handle is used for the user to save effort to rotate, which is convenient for providing power for the grinding assembly, the grinding assembly is used for grinding the materials into particles or powder, the swivelling cover is used for rotating so that the feed port is overlapped with or separated from the closing cover, the feed port is used for feeding materials, the closing cover is used for sealing the feed port, the closing cover is fixed to prevent the closing cover and the swivelling cover from rotating synchronously to affect the efficiency and effect of opening the feed port, and the transmission shaft is used for transmitting the rotation of the handle to the grinding assembly.

Compared with the prior art, the present application has the advantages that: when materials are to be put in the traditional grinder, it is necessary to open the cover or toggle the closing cover on the cover to open the feed port, so it is troublesome to open the cover, and the cover may be blocked by the handle when toggled, which is not convenient to use; and when the device is used, it is only necessary to rotate the swivelling cover to open the feed port, which is convenient and cannot be blocked by the handle, materials are fed through the feed port, and the handle is rotated to drive the grinding assembly through the transmission shaft so as to grind the materials into powder.

In some embodiments of the present invention, the shell comprises an upper shell forming a feeding cavity, an intermediate ring fixing the grinding assembly, and a lower shell forming a receiving cavity from top to bottom, the feeding cavity and the receiving cavity are separated by the grinding assembly, and the upper and lower ends of the intermediate ring are respectively connected with the bottom of the upper shell and the top of the lower shell; and the feeding cavity is used for feed concentration of the materials, the receiving cavity is used for powder concentration after grinding, and the design of the upper shell, the intermediate ring and the lower shell makes various functional areas more clear.

Further, the grinding assembly comprises an internal grinding disc and an external grinding disc which are matched with each other, a grinding cavity with a large top and a small bottom is formed between the internal grinding disc and the external grinding disc, the internal grinding disc is fixedly connected with the transmission shaft, and the external grinding disc is fixedly connected with the intermediate ring; and the internal grinding disc and the external grinding disc are matched for grinding the material, the grinding cavity has a large top and a small bottom for the material to enter the upper end easily, then the material is ground and downward so that the material is ground smaller and smaller, and the obtained particles or powder is finer and finer so as to ensure the grinding effect.

Further, the internal grinding disc is in the shape of a circular table, the upper part of the outer side surface of the internal grinding disc is provided with a first conical grinding surface, the lower part of the outer side surface of the internal grinding disc is provided with a second conical grinding surface, the first conical grinding surface and the second conical grinding surface extend to intersect, the included angle between the first conical grinding surface and the center line is greater than that between the second conical grinding surface and the center line, the first conical grinding surface and the second conical grinding surface are both provided with grinding teeth, the number of the grinding teeth on the second conical grinding surface is greater than that on the first conical grinding surface, a through hole is arranged in the center of the internal grinding disc, and the transmission shaft is penetrated in the through hole and fixedly connected with the internal grinding disc. Specifically, the bottom of the internal grinding disc is provided with a fixed slot, the transmission shaft is provided with a fixed plate, the fixed plate is provided with a clamping block, the clamping block is arranged in the fixed slot, the transmission shaft is fixedly connected with the fixed plate, the lower end of the transmission shaft is provided with a second limiting surface, the fixed plate is provided with a first mounting hole matched with the lower end of the transmission shaft, the first mounting hole is sleeved on the lower end of the transmission shaft, the first mounting hole is provided with a first plane matched with the second limiting surface, the bottom of the transmission shaft is connected with a screw, and the screw is in contact with the fixed plate; the transmission shaft and the internal grinding disc can be fixed by matching of key slots and keys; the first conical grinding surface is arranged at the upper part for contact with the material first for grinding, the second conical grinding surface is arranged at the lower part to continue grinding the material ground by the first conical grinding surface, the first conical grinding surface has a large outward angle, the second conical grinding surface has a small outward angle, and the number of the grinding teeth of the second conical grinding surface is larger so that the material can easily enter the first conical grinding surface at the upper part, but the grinding effect is better on the second conical grinding surface at the lower part, completing the transition from coarse grinding to fine grinding, achieving high grinding efficiency at the upper part and good grinding effect at the lower part, thus ensuring the efficiency and effect of grinding; the through hole is used for penetrating the transmission shaft, and the internal grinding disc is driven by the transmission shaft to rotate; and to ensure the fixing effect between the transmission shaft and the internal grinding disc, the clamping block on the fixed plate is matched and fixed with the fixed slot at the bottom of the internal grinding disc so that the fixed plate moves synchronously with the internal grinding disc, while the fixed plate is matched and fixed with the second limiting surface on the transmission shaft through the first mounting hole so that the fixed plate moves synchronously with the transmission shaft, so as to realize the synchronous movement of the transmission shaft and the internal grinding disc.

Further, the upper port of the external grinding disc is provided with a third conical grinding surface, the lower port of the external grinding disc is provided with a fourth conical grinding surface, the third conical grinding surface and the fourth conical grinding surface extend to intersect, the third conical grinding surface and the fourth conical grinding surface are both provided with grinding teeth, and the number of the grinding teeth on the fourth conical grinding surface is larger than that on the third conical grinding surface; the third conical grinding surface is arranged at the upper part for contact with the material first for grinding, the fourth conical grinding surface is arranged at the lower part to continue grinding the material ground by the third conical grinding surface, the third conical grinding surface has a small outward angle, the fourth conical grinding surface has a large outward angle, and the number of the grinding teeth on the fourth conical grinding surface is larger so that the material can easily enter the third conical grinding surface at the upper part, but the grinding effect is better on the fourth conical grinding surface at the lower part, completing the transition from coarse grinding to fine grinding, achieving high grinding efficiency at the upper part and good grinding effect at the lower part, thus ensuring the efficiency and effect of grinding; the first conical grinding surface and the third conical grinding surface are both arranged at the upper part and matched to make the opening at the upper part of the grinding cavity large so that the amount of material that can enter is increased, with a larger volume, and the grinding efficiency is high; and the second conical grinding surface and the fourth conical grinding surface are both arranged at the lower part and matched to make the opening at the lower part of the grinding cavity small and the number of the grinding teeth at the lower part large so that the material is ground finer at the lower part and the grinding effect is better.

In some embodiments of the present invention, the feed port is less than half the area of the top surface of the swivelling cover, and if the feed port is greater than half, the area of the closing cover needs to be greater than half, and the feed port cannot be fully opened.

Further, the end of the handle is provided with a rotatable handle knob.

Further, the bottom of the swivelling cover is provided with a groove formed by inward bending, the top end of the shell is provided with an arc-shaped folded edge, and the arc-shaped folded edge is installed by matching with the groove.

A manual grinder, comprising a shell, a handle and a grinding assembly, wherein the grind assembly is arranged in the shell, a transmission shaft is arranged in the shell, the upper end of the transmission shaft penetrates the shell and is connected with the handle, and the lower end of the transmission shaft is penetrated in the grinding assembly; and a hollow guiding shaft sleeve is vertically arranged in the shell, the transmission shaft is rotatably penetrated in the guiding shaft sleeve, the shell is fixedly connected with the guiding shaft sleeve, the guiding shaft sleeve is provided with a compression knob, the compression knob is located above the shell, and the guiding shaft sleeve is connected with the compression knob through threads;

The transmission shaft is provided with a scale knob, the scale knob is provided with an adjustment scale, the scale knob is located above the compression knob, the compression knob is provided with a first external thread, the scale knob is provided with a first internal thread matched with the first external thread, the scale knob is connected with the compression knob through threads, and the scale knob can be moved up and down relative to the compression knob through threads;

The handle is located above the scale knob, the upper end of the transmission shaft is provided with a second external thread, and the side part of the upper end of the transmission shaft is provided with a first limiting surface; the handle is provided with a limiting hole matched with the upper end of the transmission shaft, and the handle drives the transmission shaft to rotate around the axis through the limiting hole; the transmission shaft is connected with an adjusting knob and a nut through threads on the upper and lower sides of the handle, and the transmission shaft and the adjusting knob can be moved up and down relative to each other; and the upper end of the scale knob is provided with a concave part arranged around the transmission shaft, a first bearing connected with the transmission shaft is arranged in the concave part, the nut is located above the first bearing, and the nut is used for limiting the first bearing and controlling the clearance between the handle and the scale knob.

Further, the shell comprises an upper shell forming a feeding cavity, an intermediate ring fixing the grinding assembly, and a lower shell forming a receiving cavity from top to bottom; the grinding assembly comprises an internal grinding disc and an external grinding disc which are matched with each other, and a grinding cavity with a large top and a small bottom is formed between the internal grinding disc and the external grinding disc; the upper and lower ends of the intermediate ring are respectively in contact with the upper shell and the lower shell; the outer side surface of the guiding shaft sleeve is provided with a bracket extending towards the side wall of the feeding cavity, and the bottom of the bracket is provided with a fixed ring; the bottom of the upper shell is provided with an inward bending part, the upper and lower surfaces of the bending part are respectively in contact with the fixed ring and the intermediate ring, the bottom surface of the fixed ring is also in contact with the top of the external grinding disc, the inner side of the upper end of the intermediate ring is circumferentially provided with a first limiting step, and the fixed ring and the intermediate ring are fixed by bolts; the intermediate ring is provided with a third thread, and the lower shell is provided with a fourth thread matched with the third thread; and the inner side of the intermediate ring is provided with a support plate, the support plate comprises an annular side wall and a bottom wall located at the bottom of the annular side wall, the bottom wall is provided with a discharge hole matched with the grinding assembly, and the bottom wall is connected below the external grinding disc in a limiting mode; specifically, the support plate forms a cavity matched with the external grinding disc between the annular side wall and the bottom wall, and the external grinding disc is arranged in the cavity; the side part of the external grinding disc is provided with a third plane, and the annular side wall is provided with a fourth limiting surface matched with the third plane; and the fourth limiting surface and the third plane are matched to prevent the external grinding disc from rotating.

Further, a spring is sleeved on the transmission shaft, the transmission shaft is provided with a limiting stop above the external grinding disc, and the spring is arranged above the limiting stop; the bottom of the guiding shaft sleeve is provided with a spring slot concave upwards, and the top of the spring slot is provided with a second bearing connected with the transmission shaft; and the spring is arranged in the spring slot and used for applying a downward elastic force on the transmission shaft.

Further, the top of the shell is provided with an opening and a swivelling cover, the swivelling cover is provided with a feed port, the feed port is provided with a closing cover, the closing cover is fixed relative to the shell, the swivelling cover is rotatably connected with the shell, and the closing cover is fixedly connected with the guiding shaft sleeve; specifically, the guiding shaft sleeve is provided with a third limiting surface, the closing cover is provided with a second mounting hole matched with the third limiting surface, the second mounting hole is provided with a second plane matched with the third limiting surface, and the second plane and the third limiting surface are matched to prevent the closing cover from rotating; the compression knob is rotatably connected with the swivelling cover, the swivelling cover is sleeved on the compression knob, and the bottom surface of the compression knob is abutted with the closing cover to ensure the fixing of the closing cover; and the guiding shaft sleeve is used for protecting the transmission shaft and guiding the transmission shaft to prevent the transmission shaft from leaning to cause collision between the internal grinding disc and the external grinding disc, the bracket is used for supporting the guiding shaft sleeve and separating the material entering through the feed port to allow the material to fall into the grinding cavity evenly so as to prevent accumulation on one side, and the fixed ring shares the pressure of the bracket and is in uniform contact with the upper shell.

In some embodiments of the present invention, the intermediate ring and the support plate are detachably connected, the inner side of the intermediate ring is circumferentially provided with a second limiting step, the top of the annular side wall of the support plate is provided with an annular outer edge extending outwards, and the support plate is erected above the second limiting step through the annular outer edge.

Compared with the prior art, the present invention has the following beneficial effects:
For the manual grinder of the present invention, the handle does not interfere with the opening of the cover and it is convenient to put materials; and the manual grinder can be used for grinding coffee beans, Sichuan pepper, salt and pepper.

### Description of Drawings

Fig. 1 is a structural schematic diagram of embodiment 1 of the present invention.
Fig. 2 is a sectional view of embodiment 1 of the present invention.
Fig. 3 is a structural schematic diagram of an internal grinding disc of embodiment 1 of the present invention.
Fig. 4 is a structural schematic diagram of a fixed plate of embodiment 1 of the present invention.
Fig. 5 is a structural schematic diagram of a transmission shaft of embodiment 1 of the present invention.
Fig. 6 is a structural schematic diagram of an external grinding disc of embodiment 1 of the present invention.
Fig. 7 is a structural schematic diagram of a guiding shaft sleeve of embodiment 1 of the present invention.
Fig. 8 is a structural schematic diagram of a closing cover of embodiment 1 of the present invention.
Fig. 9 is an exploded view of embodiment 1 of the present invention.
Fig. 10 is a partially exploded view of embodiment 1 of the present invention.
Fig. 11 is a structural schematic diagram of an intermediate ring and a support plate of embodiment 2 of the present invention.

Reference signs: 1. lower shell; 2. intermediate ring; 3. upper shell; 4. closing cover; 41. second mounting hole; 42. second plane; 5. scale knob; 51. scale; 6. adjusting knob; 7. handle; 8. handle knob; 9. swivelling cover; 92. feed port; 10. nut; 11. first bearing; 12. compression knob; 13. transmission shaft; 131. second external thread; 132. limiting stop; 133. first limiting surface; 135. second limiting surface; 141. bracket; 142. guiding shaft sleeve; 143. third limiting surface; 144. fixed ring; 15. second bearing; 16. spring; 17. spring slot; 18. feeding cavity/ hopper; 19. receiving cavity/ container; 20. external grinding disc; 201. third conical grinding surface; 202. fourth conical grinding surface; 203. third plane; 21. internal grinding disc; 211. through hole; 212. first conical grinding surface; 213. second conical grinding surface; 22. fixed plate; 221. clamping block; 222. first mounting hole; 223. first plane; 23. screw; 24. support plate; 241. bottom wall; 242. annular side wall; 243. annular outer edge; 25. first limiting step; and 26. second limiting step.

### Detailed Description

The present invention is further described below in detail in combination with the drawings and embodiments.

### Embodiment 1

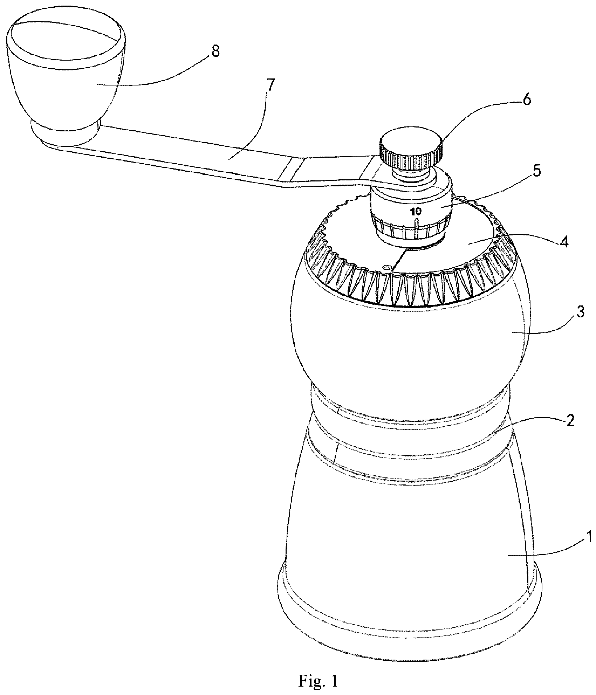

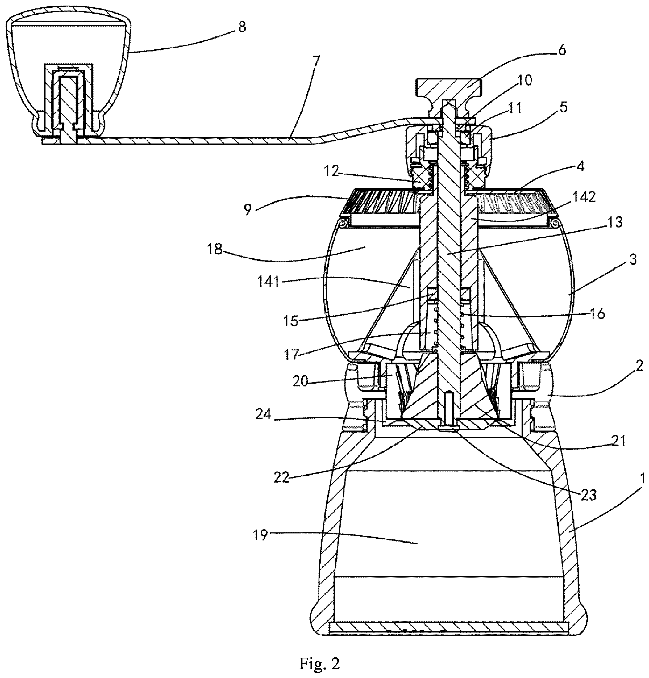

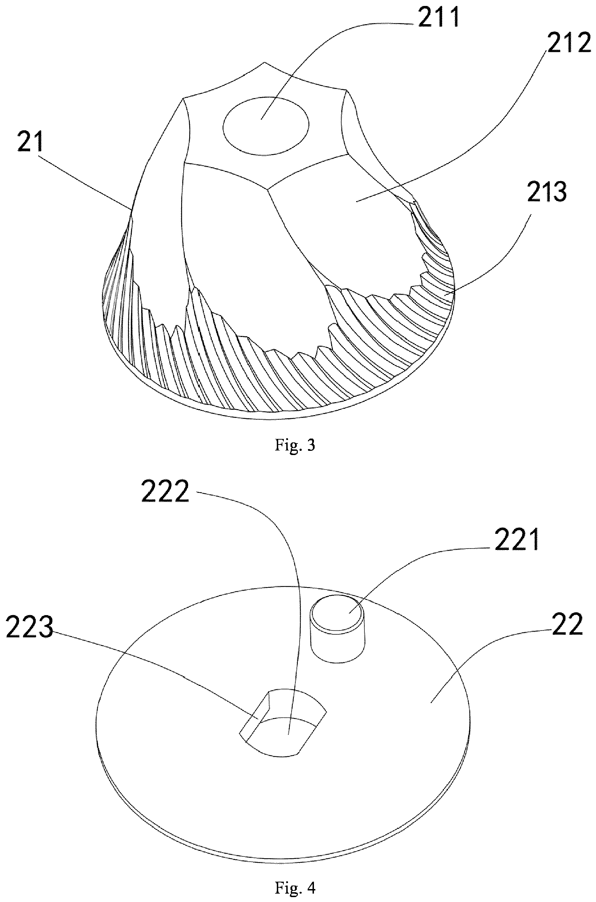

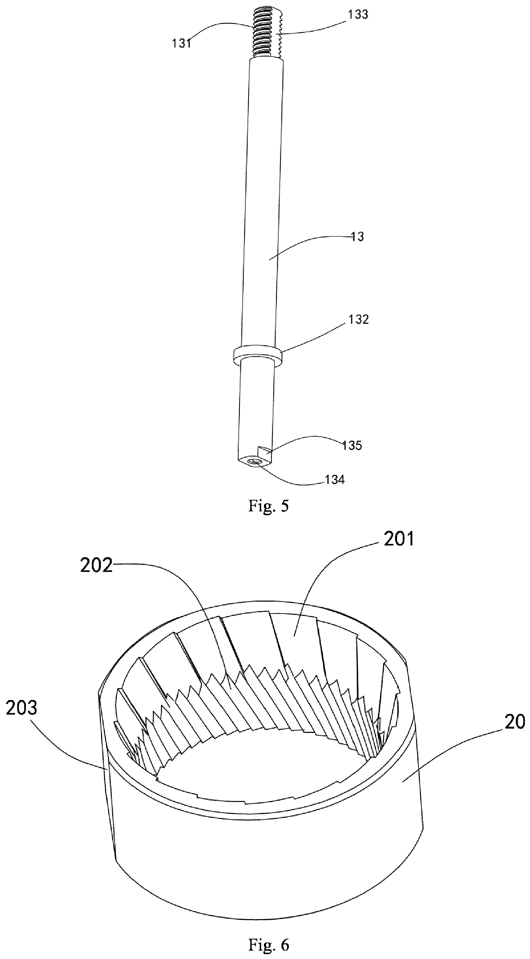

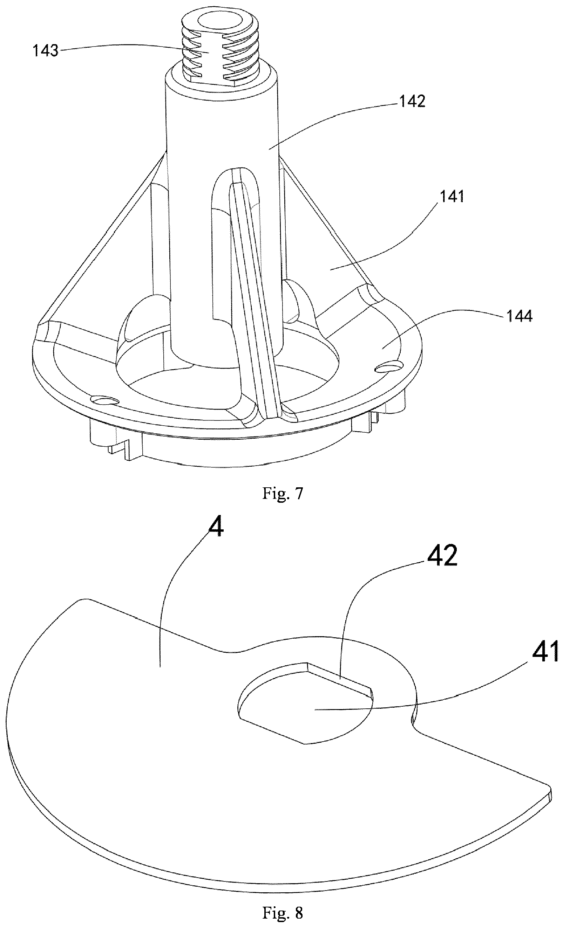

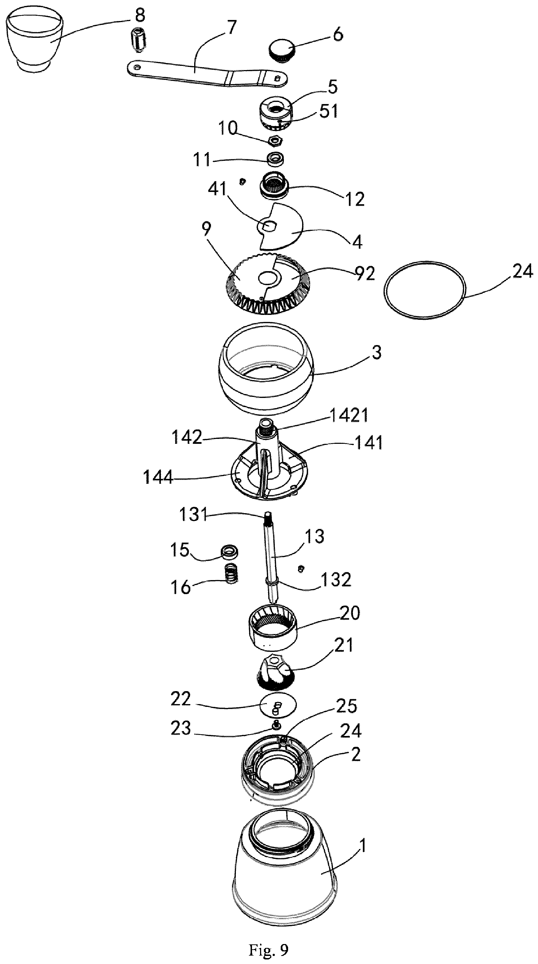

As shown in Fig. 1 to Fig. 10, a manual grinder, comprises a shell, a handle 7 and a grinding assembly, wherein the top of the shell is provided with an opening and a swivelling cover 9, the swivelling cover 9 is provided with a feed port 92, the feed port 92 is provided with a closing cover 4, the closing cover 4 is fixed relative to the shell, the swivelling cover 9 is rotatably connected with the shell, the grind assembly is arranged in the shell, a transmission shaft 13 is arranged in the shell, the upper end of the transmission shaft 13 penetrates the swivelling cover 9 and is connected with the handle 7, and the lower end of the transmission shaft 13 is penetrated in the grinding assembly; the handle 7 is used for the user to save effort to rotate, which is convenient for providing power for the grinding assembly, the grinding assembly is used for grinding the materials into particles or powder, the swivelling cover 9 is used for rotating so that the feed port 92 is overlapped with or separated from the closing cover 4, the feed port 92 is used for feeding materials, the closing cover 4 is used for sealing the feed port 92, the closing cover 4 is fixed to prevent the closing cover 4 and the swivelling cover 9 from rotating synchronously to affect the efficiency and effect of opening the feed port 92, and the transmission shaft 13 is used for transmitting the rotation of the handle 7 to the grinding assembly; when materials are to be put in the traditional grinder, it is necessary to open the cover or toggle the closing cover 4 on the cover to open the feed port, so it is troublesome to open the cover, and the cover may be blocked by the handle 7 when toggled, which is not convenient to use; and when the device is used, it is only necessary to rotate the swivelling cover 9 to open the feed port 92, which is convenient and cannot be blocked by the handle 7, the materials are fed through the feed port 92, and the handle 7 is rotated to drive the grinding assembly through the transmission shaft 13 so as to grind the materials into powder.

For convenience of use, the shell comprises an upper shell 3 forming a feeding cavity 18, an intermediate ring 2 fixing the grinding assembly, and a lower shell 1 forming a receiving cavity 19 from top to bottom, the feeding cavity 18 and the receiving cavity 19 are separated by the grinding assembly, and the upper and lower ends of the intermediate ring 2 are respectively connected with the bottom of the upper shell 3 and the top of the lower shell 1; and the feeding cavity 18 is used for feed concentration of the materials, the receiving cavity 19 is used for powder concentration after grinding, and the design of the upper shell 3, the intermediate ring 2 and the lower shell 1 makes various functional areas more clear.

To make the grinding assembly more reliable, the grinding assembly comprises an internal grinding disc 21 and an external grinding disc 20 which are matched with each other, a grinding cavity with a large top and a small bottom is formed between the internal grinding disc 21 and the external grinding disc 20, the internal grinding disc 21 is fixedly connected with the transmission shaft 13, and the external grinding disc 20 is fixedly connected with the intermediate ring 2; and the internal grinding disc 21 and the external grinding disc 20 are matched for grinding the material, the grinding cavity has a large top and a small bottom for the material to enter the upper end easily, then the material is ground and downward so that the material is ground smaller and smaller, and the obtained particles or powder is finer and finer so as to ensure the grinding effect.

To achieve a better grinding effect, the internal grinding disc 21 is in the shape of a circular table, the upper part of the outer side surface of the internal grinding disc 21 is provided with a first conical grinding surface 212, the lower part of the outer side surface of the internal grinding disc 21 is provided with a second conical grinding surface 213, the first conical grinding surface 212 and the second conical grinding surface 213 extend to intersect, the included angle between the first conical grinding surface 212 and the center line is greater than that between the second conical grinding surface 213 and the center line, the first conical grinding surface 212 and the second conical grinding surface 213 are both provided with grinding teeth, the number of the grinding teeth on the second conical grinding surface 213 is greater than that on the first conical grinding surface 212, a through hole 211 is arranged in the center of the internal grinding disc 21, and the transmission shaft 13 is penetrated in the through hole 211 and fixedly connected with the internal grinding disc 21. Specifically, the bottom of the internal grinding disc 21 is provided with a fixed slot, the transmission shaft 13 is provided with a fixed plate 22, the fixed plate 22 is provided with a clamping block 221, the clamping block 221 is arranged in the fixed slot, the transmission shaft 13 is fixedly connected with the fixed plate 22, the lower end of the transmission shaft 13 is provided with a second limiting surface 135, the fixed plate 22 is provided with a first mounting hole 222 matched with the lower end of the transmission shaft 13, the first mounting hole 222 is sleeved on the lower end of the transmission shaft 13, the first mounting hole 222 is provided with a first plane 223 matched with the second limiting surface 135, the bottom of the transmission shaft 13 is connected with a screw 23, and the screw 23 is in contact with the fixed plate 22; the transmission shaft 13 and the internal grinding disc 21 can be fixed by matching of key slots and keys; the first conical grinding surface 212 is arranged at the upper part for contact with the material first for grinding, the second conical grinding surface 213 is arranged at the lower part to continue grinding the material ground by the first conical grinding surface 212, the first conical grinding surface 212 has a large outward angle, the second conical grinding surface 213 has a small outward angle, and the number of the grinding teeth of the second conical grinding surface 213 is larger so that the material can easily enter the first conical grinding surface 212 at the upper part, but the grinding effect is better on the second conical grinding surface 213 at the lower part, completing the transition from coarse grinding to fine grinding, achieving high grinding efficiency at the upper part and good grinding effect at the lower part, thus ensuring the efficiency and effect of grinding; the through hole 211 is used for penetrating the transmission shaft 13, and the internal grinding disc 21 is driven by the transmission shaft 13 to rotate; and to ensure the fixing effect between the transmission shaft 13 and the internal grinding disc 21, the clamping block 221 on the fixed plate 22 is matched and fixed with the fixed slot at the bottom of the internal grinding disc 21 so that the fixed plate 22 moves synchronously with the internal grinding disc 21, while the fixed plate 22 is matched and fixed with the second limiting surface 135 on the transmission shaft 13 through the first mounting hole 222 so that the fixed plate 22 moves synchronously with the transmission shaft 13, so as to realize the synchronous movement of the transmission shaft 13 and the internal grinding disc 21.

To achieve a better grinding effect, the upper port of the external grinding disc 20 is provided with a third conical grinding surface 201, the lower port of the external grinding disc 20 is provided with a fourth conical grinding surface 202, the third conical grinding surface 201 and the fourth conical grinding surface 202 extend to intersect, the included angle between the third conical grinding surface 201 and the center line is smaller than that between the fourth conical grinding surface 202 and the center line, the third conical grinding surface 201 and the fourth conical grinding surface 202 are both provided with grinding teeth, and the number of the grinding teeth on the fourth conical grinding surface 202 is larger than that on the third conical grinding surface 201; the third conical grinding surface 201 is arranged at the upper part for contact with the material first for grinding, the fourth conical grinding surface 202 is arranged at the lower part to continue grinding the material ground by the third conical grinding surface 201, the third conical grinding surface 201 has a small outward angle, the fourth conical grinding surface 202 has a large outward angle, and the number of the grinding teeth on the fourth conical grinding surface 202 is larger so that the material can easily enter the third conical grinding surface 201 at the upper part, but the grinding effect is better on the fourth conical grinding surface 202 at the lower part, completing the transition from coarse grinding to fine grinding, achieving high grinding efficiency at the upper part and good grinding effect at the lower part, thus ensuring the efficiency and effect of grinding; the first conical grinding surface 212 and the third conical grinding surface 201 are both arranged at the upper part and matched to make the opening at the upper part of the grinding cavity large so that the amount of material that can enter is increased, with a larger volume, and the grinding efficiency is high; and the second conical grinding surface 213 and the fourth conical grinding surface 202 are both arranged at the lower part and matched to make the opening at the lower part of the grinding cavity small and the number of the grinding teeth at the lower part large so that the material is ground finer at the lower part and the grinding effect is better.

To ensure the transmission effect, a hollow guiding shaft sleeve 142 is vertically arranged in the feeding cavity 18, the transmission shaft 13 is rotatably penetrated in the guiding shaft sleeve 142, and the upper and lower ends of the intermediate ring 2 are respectively in contact with the upper shell 3 and the lower shell 1; the outer side surface of the guiding shaft sleeve 142 is provided with a bracket 141 extending towards the side wall of the feeding cavity 18, and the bottom of the bracket 141 is provided with a fixed ring 144; the fixed ring 144 is used for fixing the upper shell 3 and the grinding assembly, specifically, the bottom of the upper shell 3 is provided with an inward bending part, the upper and lower surfaces of the bending part are respectively in contact with the fixed ring 144 and the intermediate ring 2, and the bottom surface of the fixed ring 144 is also in contact with the top of the external grinding disc 20; the closing cover 4 is fixedly connected with the guiding shaft sleeve 142, specifically, the guiding shaft sleeve 142 is provided with a third limiting surface 143, the closing cover 4 is provided with a second mounting hole 41 matched with the third limiting surface 143, the second mounting hole 41 is provided with a second plane 42 matched with the third limiting surface 143, and the second plane 42 and the third limiting surface 143 are matched to prevent the closing cover 4 from rotating; the guiding shaft sleeve 142 is provided with a compression knob 12, and the guiding shaft sleeve 142 is connected with the compression knob 12 through threads; the compression knob 12 is rotatably connected with the swivelling cover 9, the swivelling cover 9 is sleeved on the compression knob 12, and the bottom surface of the compression knob 12 is abutted with the closing cover 4 to ensure the fixing of the closing cover 4; and the guiding shaft sleeve 142 is used for protecting the transmission shaft 13 and guiding the transmission shaft 13 to prevent the transmission shaft 13 from leaning to cause collision between the internal grinding disc 21 and the external grinding disc 20, the bracket 141 is used for supporting the guiding shaft sleeve 142 and separating the material entering through the feed port 92 to allow the material to fall into the grinding cavity evenly so as to prevent accumulation on one side, and the fixed ring 144 shares the pressure of the bracket 141 and is in uniform contact with the upper shell 3.

The transmission shaft 13 is provided with a limiting stop 132 above the grinding assembly, and the spring 16 is arranged above the limiting stop 132; the bottom of the guiding shaft sleeve 142 is provided with a spring slot 17 concave upwards, and the top of the spring slot 17 is provided with a second bearing 15 connected with the transmission shaft 13; the spring 16 is arranged in the spring slot 17 and used for applying a downward elastic force on the transmission shaft 13; and the spring slot 17 is used for housing the spring 16 and has good protection for the spring 16, the spring 16 is used for maintaining the downward force on the internal grinding disc 21 and keep the clamping block 221 in the fixed slot, and the internal grinding disc 21 moves up and down synchronously with the transmission shaft 13.

For the convenience of adjusting the size of the grinding particles, the transmission shaft 13 is provided with a scale knob 5, the scale knob 5 is provided with an adjustment scale 51, the adjustment scale 51 is convenient for controlling the size of the ground particles, the scale knob 5 is located above the compression knob 12, the compression knob 12 is provided with a first external thread, the scale knob 5 is provided with a first internal thread matched with the first external thread, the scale knob 5 is connected with the compression knob 12 through threads, and the scale knob 5 can be moved up and down relative to the compression knob 12 through threads;

The handle 7 is located above the scale knob 5, the upper end of the transmission shaft 13 is provided with a second external thread 131, and the side part of the upper end of the transmission shaft 13 is provided with a first limiting surface 133; the handle 7 is provided with a limiting hole matched with the upper end of the transmission shaft 13, and the handle 7 drives the transmission shaft 13 to rotate around the axis through the limiting hole; the transmission shaft 13 is connected with an adjusting knob 6 and a nut 10 through threads on the upper and lower sides of the handle 7, and the transmission shaft 13 and the adjusting knob 6 can be moved up and down relative to each other; specifically, the transmission shaft 13 can be moved up and down by rotating the adjusting knob 6; the adjusting knob 6 is used for adjusting the distance between the internal grinding disc 21 and the external grinding disc 20; the upper end of the scale knob 5 is provided with a concave part arranged around the transmission shaft 13, a first bearing 11 arranged around the transmission shaft 13 is arranged in the concave part, the nut 10 is located above the first bearing 11, and the nut 10 is used for limiting the first bearing 11 and controlling the clearance between the handle 7 and the scale knob 5; and the size of the ground particles can be adjusted by the user by rotating the scale knob 5 and the adjusting knob 6, the transmission shaft 13 can be moved up and down to the scale shown by the scale knob 5 by rotating the scale knob 5 and the adjusting knob 6 during adjustment, and then the internal grinding disc 21 and the transmission shaft 13 move up and down synchronously so that the vertical distance between the internal grinding disc 21 and the external grinding disc 20 is changed, and the distance between the internal grinding disc 21 and the external grinding disc 20 is also changed, changing the spacing at the bottom of the grinding cavity, and thus changing the size of the ground particles.

To ensure the opening effect of the feed port 92, the feed port 92 is less than half the area of the top surface of the swivelling cover 9, and if the feed port 92 is greater than half, the area of the closing cover 4 needs to be greater than half, and the feed port 92 cannot be fully opened.

For convenience of use, the end of the handle 7 is provided with a rotatable handle knob 8; the inner side of the upper end of the intermediate ring 2 is circumferentially provided with a first limiting step 25, and the fixed ring 144 and the intermediate ring 2 are fixed by bolts; the intermediate ring 2 is provided with a third thread, and the lower shell 1 is provided with a fourth thread matched with the third thread; the inner side of the fixed ring 144 is provided with a support plate 24, the support plate 24 comprises an annular side wall 242 and a bottom wall 241 located at the bottom of the annular side wall 242, the bottom wall 241 is connected below the grinding assembly in a limiting mode, and the bottom wall 241 is provided with a discharge hole matched with the grinding assembly; specifically, the support plate 24 forms a cavity matched with the external grinding disc 20 between the annular side wall 242 and the bottom wall 241, and the external grinding disc 20 is arranged in the cavity; the side part of the external grinding disc 20 is provided with a third plane 203, and the annular side wall 242 is provided with a fourth limiting surface matched with the third plane 203; and the fourth limiting surface and the third plane 203 are matched to prevent the external grinding disc 20 from rotating.

For convenience of use, the bottom of the swivelling cover 9 is provided with a groove formed by inward bending, the top end of the upper shell 3 is provided with an arc-shaped folded edge, the arc-shaped folded edge is installed by matching with the groove, and the adjusting knob 6 is provided with skidproof stripes; and the groove is matched with the arc-shaped folded edge, the swivelling cover 9 is installed and fixed more stably, the groove can improve the strength of the swivelling cover 9, the arc-shaped folded edge can improve the strength of the upper shell 3, and the skidproof stripes can prevent slipping during use.

### Embodiment 2

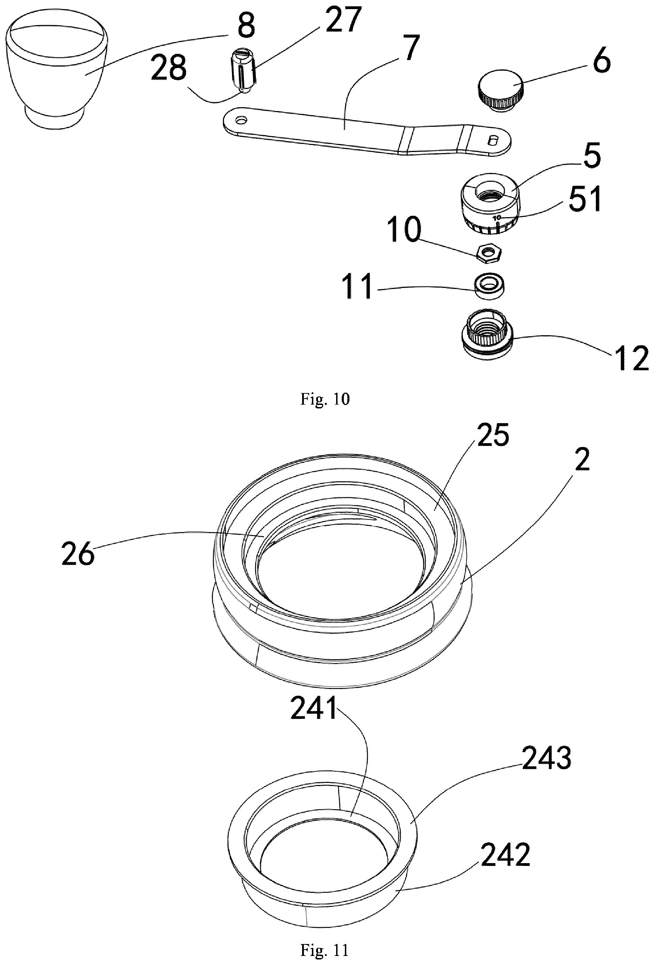

The present embodiment is basically the same as embodiment 1, except that the intermediate ring 2 and the support plate 24 are detachably connected, as shown in Fig. 11, the inner side of the intermediate ring 2 is circumferentially provided with a second limiting step 26, the top of the annular side wall 242 of the support plate 24 is provided with an annular outer edge 243 extending outwards, and the support plate 24 is erected above the second limiting step 26 through the annular outer edge 243.

For the manual grinder of the present invention, the handle does not interfere with the opening of the cover and it is convenient to put materials; and the manual grinder can be used for grinding coffee beans, Sichuan pepper, salt and pepper.

Finally, it should be noted that the above embodiments are only used for describing the technical solutions of the present invention rather than limitation. Although the present invention is described in detail by referring to the above embodiments, those ordinary skilled in the art should understand that the technical solution recorded in each of the above embodiments can be still amended, or some technical features therein can be replaced equivalently. However, these amendments or replacements do not enable the essence of the corresponding technical solutions to depart from the spirit and the scope of the technical solutions of various embodiments of the present invention.

## Claims

1. A manual grinder, comprising a shell, a handle and a grinding assembly, wherein the top of the shell is provided with an opening and a swivelling cover, the swivelling cover is provided with a feed port, the feed port is provided with a closing cover, the closing cover is fixed relative to the shell, the swivelling cover is rotatably connected with the shell, the grind assembly is arranged in the shell, a transmission shaft is arranged in the shell, the upper end of the transmission shaft penetrates the swivelling cover and is connected with the handle, and the lower end of the transmission shaft is penetrated in the grinding assembly.

2. The manual grinder according to claim 1, wherein the shell comprises an upper shell forming a feeding cavity, an intermediate ring fixing the grinding assembly, and a lower shell forming a receiving cavity from top to bottom.

3. The manual grinder according to claim 2, wherein the grinding assembly comprises an internal grinding disc and an external grinding disc which are matched with each other, and a grinding cavity with a large top and a small bottom is formed between the internal grinding disc and the external grinding disc.

4. The manual grinder according to claim 3, wherein the internal grinding disc is in the shape of a circular table, the upper part of the outer side surface of the internal grinding disc is provided with a first conical grinding surface, the lower part of the outer side surface of the internal grinding disc is provided with a second conical grinding surface, the first conical grinding surface and the second conical grinding surface extend to intersect, the first conical grinding surface and the second conical grinding surface are both provided with grinding teeth, the number of the grinding teeth on the second conical grinding surface is greater than that on the first conical grinding surface, a through hole is arranged in the center of the internal grinding disc, and the transmission shaft is penetrated in the through hole and fixedly connected with the internal grinding disc.

5. The manual grinder according to claim 3, wherein the upper port of the external grinding disc is provided with a third conical grinding surface, the lower port of the external grinding disc is provided with a fourth conical grinding surface, the third conical grinding surface and the fourth conical grinding surface extend to intersect, the third conical grinding surface and the fourth conical grinding surface are both provided with grinding teeth, and the number of the grinding teeth on the fourth conical grinding surface is larger than that on the third conical grinding surface.

6. The manual grinder according to claim 1, wherein the feed port is less than half the area of the top surface of the swivelling cover.

7. The manual grinder according to claim 1, wherein the bottom of the swivelling cover is provided with a groove formed by inward bending, the top end of the shell is provided with an arc-shaped folded edge, and the arc-shaped folded edge is installed by matching with the groove.

8. A manual grinder, comprising a shell, a handle and a grinding assembly, wherein the grind assembly is arranged in the shell, a transmission shaft is arranged in the shell, the upper end of the transmission shaft penetrates the shell and is connected with the handle, and the lower end of the transmission shaft is penetrated in the grinding assembly; and a hollow guiding shaft sleeve is vertically arranged in the shell, the transmission shaft is rotatably penetrated in the guiding shaft sleeve, the shell is fixedly connected with the guiding shaft sleeve, the guiding shaft sleeve is provided with a compression knob, the compression knob is located above the shell, and the guiding shaft sleeve is connected with the compression knob through threads;
a scale knob is sleeved on the transmission shaft, the scale knob is provided with an adjustment scale, the scale knob is located above the compression knob, the compression knob is provided with a first external thread, the scale knob is provided with a first internal thread matched with the first external thread, the scale knob is connected with the compression knob through threads, and the scale knob can be moved up and down relative to the compression knob through threads;
the handle is located above the scale knob, the upper end of the transmission shaft is provided with a second external thread, and the side part of the upper end of the transmission shaft is provided with a first limiting surface; the handle is provided with a limiting hole matched with the upper end of the transmission shaft, and the handle drives the transmission shaft to rotate around the axis through the limiting hole; the transmission shaft is connected with an adjusting knob and a nut through threads on the upper and lower sides of the handle, and the transmission shaft and the adjusting knob can be moved up and down relative to each other; and the upper end of the scale knob is provided with a concave part arranged around the transmission shaft, a first bearing connected with the transmission shaft is arranged in the concave part, the nut is located above the first bearing, and the nut is used for limiting the first bearing and controlling the clearance between the handle and the scale knob.

9. The manual grinder according to claim 8, wherein the shell comprises an upper shell forming a feeding cavity, an intermediate ring fixing the grinding assembly, and a lower shell forming a receiving cavity from top to bottom; the grinding assembly comprises an internal grinding disc and an external grinding disc which are matched with each other, and a grinding cavity with a large top and a small bottom is formed between the internal grinding disc and the external grinding disc; the upper and lower ends of the intermediate ring are respectively in contact with the upper shell and the lower shell; the outer side surface of the guiding shaft sleeve is provided with a bracket extending towards the side wall of the feeding cavity, and the bottom of the bracket is provided with a fixed ring; the bottom of the upper shell is provided with an inward bending part, the upper and lower surfaces of the bending part are respectively in contact with the fixed ring and the intermediate ring, the bottom surface of the fixed ring is also in contact with the top of the external grinding disc, the inner side of the upper end of the intermediate ring is circumferentially provided with a first limiting step, and the fixed ring and the intermediate ring are fixed by bolts; the intermediate ring is provided with a third thread, and the lower shell is provided with a fourth thread matched with the third thread; and the inner side of the intermediate ring is provided with a support plate, the support plate comprises an annular side wall and a bottom wall located at the bottom of the annular side wall, the bottom wall is provided with a discharge hole matched with the grinding assembly, and the bottom wall is connected below the external grinding disc in a limiting mode;
a spring is sleeved on the transmission shaft, the transmission shaft is provided with a limiting stop above the external grinding disc, and the spring is arranged above the limiting stop; the bottom of the guiding shaft sleeve is provided with a spring slot concave upwards, and the top of the spring slot is provided with a second bearing connected with the transmission shaft; and the spring is arranged in the spring slot and used for applying a downward elastic force on the transmission shaft.

10. The manual grinder according to claim 9, wherein the intermediate ring and the support plate are detachably connected, the inner side of the intermediate ring is circumferentially provided with a second limiting step, the top of the annular side wall of the support plate is provided with an annular outer edge extending outwards, and the support plate is erected above the second limiting step through the annular outer edge.
